# EUROPEAN PATENT APPLICATION

(11) **EP 3 819 519 A1**
(43) Date of publication of application: **12.05.2021**
(21) Application number: 20152115.0
(22) Date of filing: 16.01.2020
(51) Int. Cl.: F16F 9/02, F16F 9/49

(54) **CONTROLLED STOP GAS SPRING**

(30) Priority: 11.11.2019 ES 201930931 U
(71) Applicant: Azol-Gas, S. L., 01015 Vitoria, Álava (ES)
(72) Inventor: Dominguez Chamorro, Javier, 01015 Vitoria (ES); Ramos Díaz de Guereñu, Edorta, 01015 Vitoria (ES); Alejos Pérez, Oscar, 01015 Vitoria (ES)
(74) Representative: Izquierdo Blanco, Maria Alicia

(57) **Abstract**

Controlled stop gas spring (1) of the type used in wet environments with great presence of fluids such as water and coolant, comprising:
A cylinder (2) closed at one end by the wall (4) and at the other by the bottom cover (5);
A piston (3) with a plunger (15) and a rod (16) movable within the cylinder (2) demarcating an upper chamber (7) bounded by the wall (4) and the plunger (15) of the piston (3) and a lower chamber (8) bounded by the plunger (15) of the piston (3) and the bottom cover (5);
A pneumatic actuator (6) inside the bottom cover (5) which has a fixed pnuematic piston (9) and a mobile pneumatic piston (10) and an air chamber (11), said pneumatic actuator (6) being capable of preventing the passage of gas between the chambers (7) and (8) of the controlled stop gas spring (1); in which there is an orifice (12) on the side of the bottom cover (5) communicating the air chamber (ii) with the outside, said opening (12) being capable of housing an non-return evacuation device (13) preventing the entry of external agents.

## Description

### Field of the Invention

This invention relates to a controlled stop gas spring employed in wet environments with a great presence of fluids (such as water and coolant); and with a removal device that ensures sealing against the entry of water and other undesirable external agents.

### State of the Prior Art

Currently, in relation to the prior art, the use of gas spring diework and stampware are known, consisting of a cylinder and an axially movable rod within said cylinder which undergoes a force or pressure on it, such as during a material forming process in which a piece is obtained by a blow. An upper die or punch, for example, can strike a lower die or matrix, these being arranged under the gas cylinder, whose rod is moved to the said lower die which is receiving the blow from the upper die. Such gas springs comprise a gas chamber normally filled with nitrogen, said gas being compressed when the rod moves by pressure being exerted on it, or said gas decompressing when pressure is no longer exercised, causing a new displacement of the rod in the opposite direction to return it to its original position. Malfunctioning of these devices can cause serious problems in the product which is obtained during the forming process of the material and which may deform if the rod meets it when returning to the original position.

In order to solve this problem, controlled stop gas springs are also known, so that the moment in which the rod returns to its original position can be controlled, preventing deformation of the product obtained by an undesirable force of said rod. Such gas springs comprise two main chambers and a pneumatic drive for adjusting the pressure equalization between the chambers to control movement of the rod of the cylinder, and comprising a means for closure adapted to close the passage between the main chambers, so that opening or closing this (typically a valve) can allow or disallow the passage of gas between the chambers and thus prevent the return of the cylinder rod to its original position and thereby prevent the rod from moving the workpiece.

However, when these springs are used in wet environments such as in hot stamping or die compact and at high speeds, large amounts of water and coolant are needed for the proper functioning of the machines. In this case, water can be introduced into the main chambers of the gas spring during each pressing cycle of the machine, causing malfunction and deterioration of its elements by oxidation. This intake of water usually occurs through the contact hole with the outside present in this type of controlled stop springs, which allows the exchange of air to the interior and exterior valve to avoid excessive pressure.

As a result of this air exchange with the exterior, a solution to prevent entry of impurities to the gas chamber of the spring is the inclusion of a filter in said contact hole to the outside. However, under conditions of excessively damp and high pressure environments, water enters the gas spring, leads to deterioration thereof.

The present invention seeks to provide a gas spring with a controlled stop that allows correct performance without the occurance of overpressure stop and thereby avoiding undesired entry of external agents to the cylinder while performing the task correctly when needed, accurately compensating the pressure in the chambers of the gas spring for proper travel of the piston and the consequent compensation of the pressure exerted, for example, by stamping or die-stamping machines.

### Explanation and advantages of the invention

As opposed to this prior art, the present invention relates to a controlled stop gas spring employed in wet environments with great presence of fluids, such as water and coolant fluid, comprising a cylinder closed at one end by the wall and on the other by the bottom cover closing the gas spring. With a piston comprising a rod and piston, movable within the cylinder, delimiting an upper chamber limited by the wall and the plunger of the piston and a lower chamber limited by the wall of the piston and the bottom cover. And with a common pneumatic drive in this type of spring for the stop gas spring and located inside the lower cover which has a fixed pneumatic piston and a mobile pneumatic piston and air chamber, said susceptible pneumatically to prevent the passage of gas entering the top and bottom of the gas spring when activating closure means adapted to close the passage between the chambers and the cylinder, commonly through a valve, thereby causing the gas spring to stop; and wherein there is a hole in the side of the bottom cover of the controlled stop gas spring communicating the air chamber with the outside, said opening capable of receiving a device and non-return evacuación that prevents the entry of external agents but allows the air outlet.

Thanks to this configuration, by including a non-return evacuation device in the communication port of the air chamber of the pneumatic actuator to the outside, when the stop signal is given to the pneumatic drive, the mobile pneumatic piston advances to cause the closing of the valve and then moves a volume of air in the air chamber bounded mobile pneumatic piston, allowing the exhaust air to exit through said non-return evacuation device and preventing it from creating an overpressure and not stopping the spring or performing this stop incorrectly. This also prevents the breakage or displacement of the pneumatic pistons in the event of wear of the seal that closes the high-pressure gas in the controlled stop gas spring, which, thanks to the non-return evacuation device, which, in the event that the gas passes from the lower chamber of the gas spring to the air chamber of the pneumatic drive, said gas could exit to the exterior and avoid accumulating and causing the abovementioned rupture of the pistons.

Therefore, usually to prevent entry of external agents such as dust, shavings and other debris to the inside of the spring, in other embodiments a filter is used in said communication hole to the outside. However, for wet environments such as hot stamping or dies of reduced dimensions, in which it is used to cool large amounts of fluid such as water or coolant, according to the scope of the present invention, the filter does not prevent the entry of water and after several cycles of operation, the chambers of the controlled stop gas spring present quantities of water that prevent proper operation of the spring and subsequent oxidation. Therefore, in the present invention, the abovementioned exit of air to the exterior is permitted during the advance of the mobile piston by means of the non-return evacuation device installed in the communication port of the air chamber with the outside, but during the return of the movable pneumatic piston in which suction will occur, the way is blocked, preventing water or any other external agent from entering.

In a preferred embodiment, this non-return evacuation device consists of a spring-return valve which may be commercial. It is expected that the evacuation device may be a non-return flap, disc or membrane valve, as required. Providing a simple solution, which provides greater versatility and safety to the controlled stop gas spring. Also, this type of anti-return valves may be installed simply threaded into the outlet opening of air the the exterior, or by engagement in grooves or flanges. Thus, they are easily adaptable to other controlled stop gas springs for proper operation in wet environments without having to configure them during design and production. Therefore, a more versatile and durable controlled stop gas spring is obtained and manufacturing costs are thereby reduced.

In the case of controlled stop gas springs of reduced dimensions, there occurs a slight depression in the air chamber of the pneumatic actuator, which means that the mobile pneumatic piston does not recover its entire course. To avoid this unwanted effect, the lower cap of the controlled stop gas spring is designed with an additional clearing house in contact with the air chamber of the pneumatic drive which, for ease of manufacture, can be machined as a through hole and the subsequent inclusion of a closure cap which will allow the obtaining of the optimum working pressure for the proper movement of the movable pneumatic piston. Thanks to this setting, the air volume of the air chamber decreases and the pressure generated is increased allowing normal operation of the gas spring.

With this additional volume of the additional clearing house, it can be observed how the depression decreases with respect to the design without further additional clearing house and it is shown how this invention prevents the entry of external agents allowing correct funtioning of the controlled stop gas spring and thus prolonging its life and making it safer.

### Drawings and references

To better understand the nature of the invention, in the accompanying drawings an arrangement is presented with a merely illustrative and non-limiting character.
Figure 1 shows a partial cut-away view along the mid-axial plane of the controlled stop gas spring (1) in which the pneumatic actuator (6) is displayed on the bottom cover (5). On the upper section, a detail is shown of the pneumatic drive of the controlled stop gas spring on a plane passing through the middle of the non-return evacuation device (13) and through the additional clearing house (14) transversely to the pneumatic pistons (9 and 10), wherein said non-return evacuation device (13) is displayed in the orifice (12) and in contact with the additional clearing house (14).
Figure 2 shows a bottom view of the controlled stop gas spring (1) with a partial cross section where the interaction of the non-return evacuation device (13) is displayed with the pneumatic drive (6) air chamber (11) with the unactivated mobile pneumatic piston (10).
Figure 3 shows a bottom view of the controlled stop gas spring (1) with a partial cross section where the interaction of the non-return evacuation device (13) is displayed with the pneumatic drive (6) air chamber (11) with the mobile pneumatic piston (10) at the end of the course.
Figura 4 shows an isometric view of the bottom cover (5) of the controlled stop gas spring (1), where you can see the unassembled non-return evacuation device (13) and the additional clearing house (14).
Figure 5 shows a partial sectional view as the detail of Figure 1, but in this case for cases in which the controlled stop gas spring (1) does not have an additional clearing house (14).

In these figures, the following references are indicated:
1. Controlled stop gas spring
2. Cylinder
3. Piston
4. Wall
5. Lower cover
6. Pneumatic drive
7. Upper chamber
8. Lower chamber
9. Fixed pneumatic piston
10. Mobile pneumatic piston
11. Air chamber
12. Orifice
13. Non-return evacuation device
14. Additional clearing house
15. Plunger piston (3)
16. Piston rod (3)

### Presentation of a preferred embodiment

With reference to the drawings and references listed above, illustrated in the accompanying drawings is a preferred arrangement for the purpose of the invention referred to as a controlled stop gas spring (1) for employment in wet environments with a great presence of fluids such as water and coolants, comprising a cylinder (2) closed at one end by the wall (4) and and at the other by the bottom cover (5); with a piston (3) with a plunger (15) and a rod (16) movable within the cylinder (2) demarcating an upper chamber (7) bounded by the wall (4) and the plunger (15) of the piston (3) and a lower chamber (8) bounded by the plunger (15) of the piston (3) and the bottom cover (5); and with a pneumatic drive (6) inside the bottom cover (5) that has a fixed pneumatic piston (9), a movable pneumatic piston (10) and an air chamber (ii), said pneumatic actuator (6) capable of preventing the passage of gas between the chambers (7) and (8) of the cylinder (2) causing the stop of the controlled stop gas spring (1); in which there is a orifice (12) on the side of the bottom cover (5) communicating the air chamber (11) with the outside, said orifice (12) capable of housing a non-return evacuation device (13).

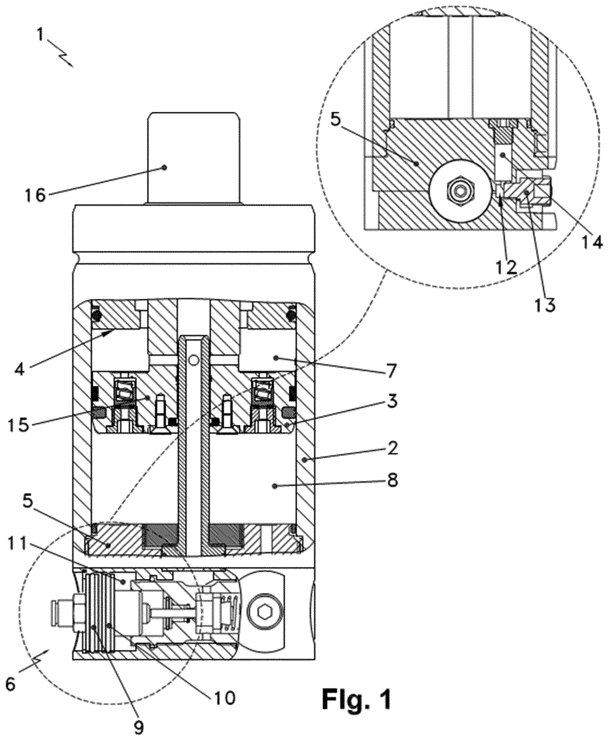

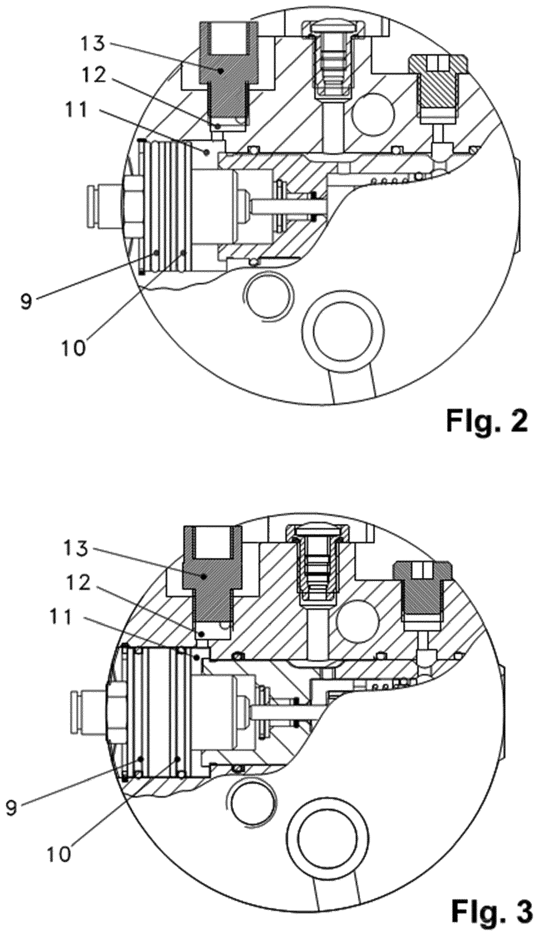

As seen in Figures 1 and 2, at first the mobile pneumatic piston (10) is at rest at the beginning of the course. Thus, at the moment that the pneumatic signal is given to stop the controlled stop gas spring (1), the air moves the mobile pneumatic piston (10) until it makes a mechanical stop with the valve closing the passage of air between the lower chamber (8) and the upper chamber (7) blocking the rod (16) and thereby causing the stop of the controlled stop gas spring (1). As can be seen in Figure 3, at that moment the pressure is increased in the air chamber (11) and, in order to avoid excessive pressure causing an incorrect stop in the controlled stop gas spring (1) a small air ejection occurs from the air chamber (11) to the exterior through the orifice (12).

Once the passage is opened between the chambers (7 and 8), the mobile pneumatic piston (10) goes back to the fixed pneumatic piston (9), and it is at this time when air suction from the outside occurs through the orifice (12). However, by way of the non-return evacuation device (13) preferably constituted by a non-return valve, said suction is avoided and thus the entry is avoided of external agents to the interior of the stop gas spring (1) that may cause malfunction.

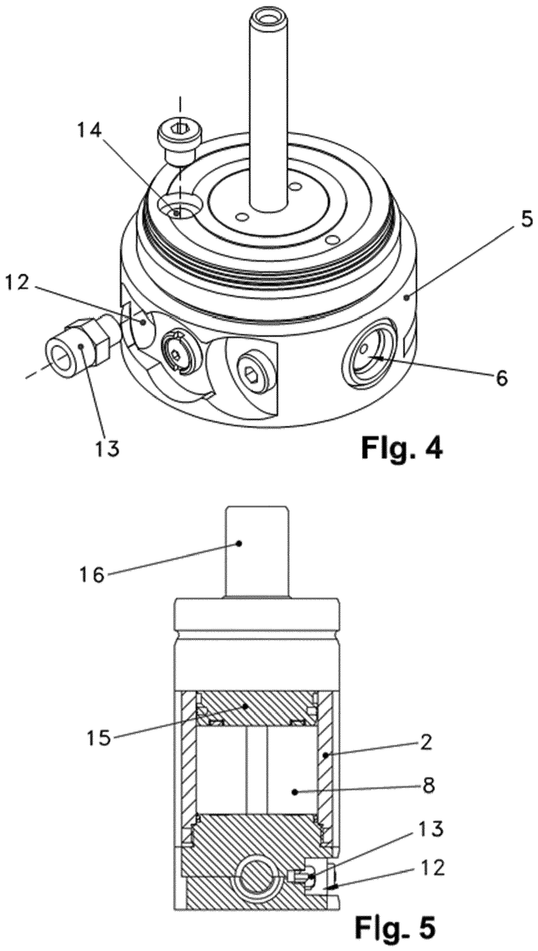

In this manner, as can be seen in Figure 4, by the threaded installation, by fitting o by flanges of the anti-return valve (13) on the side of the bottom cover (5) the entry of said unwanted external agents into the chambers (7 and 8) is easily prevented.

The anti-return valve used may be a spring, flapper, disc, membrane and any other allowing for work in the required pressure conditions.

For the case of controlled stop gas spring (1) of reduced dimensions in the bottom cover (5), there is an additional clearing house (14) in contact with the air chamber (11) capable of housing a larger volume of air compensation (detail of Figure 1 and Figure 4). In Figure 5, the usual spring is shown, wherein said additional clearing house (14) is not necessary. Thus, thanks to the additional volume provided by said additional clearing house (14), even though the mobile pneumatic piston (10) does not recover its entire course, it is possible to obtain the optimum working pressure for the proper operation of the controlled stop gas spring (1).

Variations in materials, shape, size and arrangement of the component elements do not alter the essence of this invention, described in a non-limiting manner that should allow its reproduction by an expert.

## Claims

1. Controlled stop gas spring (1) of the type used in wet environments with great presence of fluids such as water and coolant, comprising:
A cylinder (2) closed at one end by the wall (4) and at the other by the bottom cover (5);
A piston (3) with a plunger (15) and a rod (16) movable within the cylinder (2) demarcating an upper chamber (7) bounded by the wall (4) and the plunger (15) of the piston (3) and a lower chamber (8) bounded by the plunger (15) of the piston (3) and the bottom cover (5);
A pneumatic actuator (6) inside the bottom cover (5) which has a fixed pnuematic piston (9) and a mobile pneumatic piston (10) and an air chamber (11), said pneumatic actuator (6) being capable of preventing the passage of gas between the chambers (7) and (8) of the controlled stop gas spring (1); **characterized in that** there is an orifice (12) on the side of the bottom cover (5) communicating the air chamber (ii) with the outside, said opening (12) being capable of housing an non-return evacuation device (13) preventing the entry of external agents.

2. Controlled stop gas spring (1) according to claim 1, **characterized in that** the non-return evacuation device (13) is constituted by a non-return spring valve.

3. Controlled stop gas spring (1) according to claim 1, **characterized in that** the non-return evacuation device (13) is constituted by a non-return clapper valve.

4. Controlled stop gas spring (1) according to claim 1, **characterized in that** the non-return evacuation device (13) is constituted by a non-return disc valve.

5. Controlled stop gas spring (1) according to claim 1, **characterized in that** the non-return evacuation device (13) is constituted by a non-return membrane valve.

6. Controlled stop gas spring (1) according to any of the preceding claims, **characterized in that** the non-return valve is threaded in the orifice (12).

7. Controlled stop gas spring (1) according to any of the preceding claims, **characterized in that** the non-return evacuation device (13) is installed by slotting into grooves in the orifice (12).

8. Controlled stop gas spring (1) according to any of the preceding claims, **characterized in that** the non-return evacuation device (13) is installed in the flanged orifice (12).

9. Controlled stop gas spring (1) according to any of the preceding claims, **characterized in that** in the bottom cover (5) there is an additional clearing house (14) in contact with the air chamber (ii) capable of housing a larger volume of compensation air.
